# FASCICULE DE BREVET EUROPEEN

(11) **EP 2 872 746 B1**
(45) Date de publication et mention de la délivrance du brevet: **26.12.2018**
(21) Numéro de dépôt: 13744717.3
(22) Date de dépôt: 08.07.2013
(51) Int. Cl.: B29C 70/30, F01D 25/00, F01D 25/24, B29K 105/08, B29C 70/54, B29K 309/08, F01D 21/04

(54) **PROCÉDÉ DE FABRICATION D'UN CARTER DE TURBOMACHINE DANS UN MATÉRIAU COMPOSITE ET CARTER ASSOCIÉ**
VERFAHREN ZUR HERSTELLUNG EINES TURBOMASCHINENGEHÄUSES AUS EINEM VERBUNDSTOFF UND ZUGEHÖRIGES GEHÄUSE
METHOD FOR MANUFACTURING A TURBOMACHINE CASING FROM A COMPOSITE MATERIAL AND ASSOCIATED CASING

(30) Priorité: 16.07.2012 FR 1256850
(43) Date de publication de la demande: 20.05.2015
(73) Titulaire: Safran Aircraft Engines, 75015 Paris (FR)
(72) Inventeur: CORRADINI, Sylvain, F-77550 Moissy-Cramayel Cedex (FR); ELISSEEFF, Timothée, F-77550 Moissy-Cramayel Cedex (FR)
(74) Mandataire: Regimbeau
(86) Numéro de dépôt international: PCT/FR2013/051626
(87) Numéro de publication internationale: WO 2014/013161

(56) Documents cités:
- EP-A2- 2 434 105
- DE-A1-102006 041 321
- US-A1- 2008 145 215
- US-A1- 2010 077 721
- US-A1- 2012 099 981
- US-A1- 2012 148 392

## Description

L'invention concerne de manière générale un carter de turbine à gaz, et plus particulièrement un carter de rétention pour soufflante de turbine à gaz pour un moteur aéronautique en matériau composite comprenant un renfort fibreux densifié par une matrice et son procédé de fabrication associé.

Le carter de soufflante d'un moteur aéronautique à turbine à gaz peut remplir plusieurs fonctions. Il définit la veine d'entrée d'air dans le moteur, supporte un matériau abradable en regard des sommets d'aubes de soufflante, supporte une structure généralement sous forme de panneaux acoustiques pour l'atténuation des ondes sonores en entrée du moteur et incorpore ou supporte un bouclier de rétention de débris projetés sur la face interne du carter tels que des objets ingérés ou des débris d'aubes endommagées.

De façon courante, un carter de soufflante comprend une paroi relativement mince définissant la veine d'entrée d'air. Le carter peut notamment être réalisé en métal ou dans un matériau composite. Par exemple, il a été proposé dans le document FR 2 913 053 de réaliser le carter de soufflante en matériau composite d'épaisseur variable, par formation d'un renfort fibreux et densification du renfort par une matrice. Le renfort fibreux est formé par un enroulement en couches superposées sur un mandrin d'une texture fibreuse obtenue par tissage tridimensionnel avec épaisseur évolutive, afin d'intégrer le bouclier de rétention par simple augmentation localisée d'épaisseur.

Le renfort fibreux comprend des fibres, notamment en carbone, verre, aramide ou céramique. La matrice quant à elle est typiquement une matrice polymère, par exemple époxyde, bismaléimide ou polyimide.

Le carter peut être réalisé en une seule pièce et comprend au niveau de ses extrémités axiales des brides. Une première bride, dite amont, permet la fixation d'une manche d'entrée d'air au carter, tandis que la deuxième bride, dite aval, permet le raccordement du carter de soufflante avec un carter intermédiaire au moyen d'organes de liaison du type vis-écrous, avec interposition d'une virole annulaire appliquée contre la face aval de la bride aval. Ici, l'amont et l'aval sont définis par le sens d'écoulement des gaz dans la turbomachine. Le carter intermédiaire est en métal, en titane, dans un alliage métallique à base de titane ou encore en aluminium, de même que la virole annulaire et la manche d'entrée d'air.

Néanmoins, lorsque notamment les pièces en contact avec le carter de soufflante sont réalisées en aluminium, afin de réduire la masse totale de la turbine, et que le carter de soufflante est réalisé en fibres de carbone, une réaction chimique de type corrosion galvanique entre les fibres du carter de soufflante et l'aluminium des pièces provoque leur détérioration rapide et prématurée.

Ainsi, le document EP 2 434 105 décrit un carter de rétention de soufflante d'une turbomachine en matériau composite, comprenant un corps principal globalement cylindrique et une bride amont. Une plaque métallique est fixée sur la face aval de la bride amont, par l'intermédiaire d'une couche de protection contre la corrosion galvanique et d'un adhésif. La couche de protection galvanique est assemblée sur le carter en matériau composite après sa fabrication.

Le document US 2012/099981 quant à lui décrit un carter de rétention de soufflante d'une turbomachine en matériau composite, comprenant un corps principal globalement cylindrique, une bride amont et une bride aval. Le carter comprend une contre-plaque annulaire appliquée sur la face amont de la bride aval, et au moins une virole annulaire fixée sur la face interne du carter. La virole peut être en matériau métallique. Dans ce cas, une couche d'isolation galvanique, par exemple en fibres de verre, est interposée entre la virole et le matériau composite du carter préalablement à la formation de la préforme fibreuse. Il peut s'avérer cependant difficile de fixer la couche de protection galvanique sur la texture fibreuse du carter et de maîtriser des dimensions.

Enfin, le document US 2012/148392 décrit un carter de rétention de soufflante d'une turbomachine en matériau composite, comprenant un corps principal globalement cylindrique et une bride amont. Une plaque métallique est fixée sur la face aval de la bride amont.

Aucun de ces documents ne décrit de carter réalisé en matériau composite et qui soit capable de résister aux phénomènes de corrosion galvanique dus à la fixation du carter sur les pièces métalliques amont et aval, à savoir la manche d'entrée d'air et le carter intermédiaire. Par ailleurs, les procédés d'application de la couche de protection connus sont difficiles à mettre en oeuvre et nécessitent des ajustements dimensionnels.

Un objectif de l'invention est donc de proposer un procédé de fabrication d'un carter de soufflante d'une turbomachine en matériau composite comprenant un renfort fibreux à base de carbone selon la revendication 1, qui soit capable de résister aux phénomènes de corrosion galvanique dus à la fixation u carter sur les pièces métalliques amont et aval de la turbomachine, qui soit simple à réaliser et dont les dimensions finales peuvent être maîtrisées.

Pour cela, l'invention propose un procédé de fabrication d'un carter de turbomachine en matériau composite comprenant un renfort fibreux densifié par une matrice selon la revendication 1, comprenant les étapes successives suivantes :
- réaliser une couche de protection contre la corrosion galvanique à partir d'une tresse de fibres de verre séchées, d'une bande de fibres de verre séchées ou d'une spirale de fibres de verre séchées de manière à obtenir une couche de protection contre la corrosion galvanique semi-rigide,
- disposer la couche de protection contre la corrosion galvanique sur un mandrin de profil correspondant à celui du carter à fabriquer comprenant un flasque radial annulaire, en appliquant la couche de protection contre le flasque radial annulaire du mandrin,
- former le renfort fibreux sur le mandrin en recouvrant la couche de protection, et
- densifier le renfort fibreux par une matrice.

Certaines caractéristiques préférées mais non limitatives du procédé décrit ci-dessus sont les suivantes :
- la couche de protection contre la corrosion galvanique est préformée aux dimensions du mandrin et du flasque radial annulaire,
- la couche de protection contre la corrosion galvanique est renforcée par un liant,
- la couche de protection contre la corrosion galvanique est maintenue en position sur le mandrin par des organes de maintien fixés sur la circonférence du flasque radial annulaire du mandrin lors de la formation du renfort fibreux, et
- les organes de maintien sont ajustables à l'épaisseur de la couche de protection.

L'invention propose également un carter de turbomachine en matériau composite selon la revendication 5, obtenu selon le procédé ci-dessus, comprenant un renfort fibreux densifié par une matrice, comprenant un corps principal globalement cylindrique présentant une direction principale s'étendant selon un axe longitudinal, et au moins une bride s'étendant radialement par rapport à l'axe longitudinal depuis une extrémité libre du corps principal. Le carter comprend en outre une couche de protection contre la corrosion galvanique comprenant des fibres de verre disposée contre une surface radiale de la bride annulaire et s'étendant dans le prolongement d'une paroi interne du corps principal.

Certaines caractéristiques préférées mais non limitative du carter sont les suivantes :
- il comprend une bride amont et une bride aval s'étendant radialement par rapport à l'axe longitudinal depuis une extrémité libre amont et aval respectivement du corps principal, et dans lequel la bride amont et la bride aval comprennent chacune une couche de protection contre la corrosion galvanique disposée contre la surface radiale desdites brides amont et aval et s'étendant dans le prolongement de la paroi interne du corps principal,
- la couche de protection contre la corrosion galvanique comprend en outre un liant, et
- la couche de protection contre la corrosion galvanique a une section transversale en L, et comprend une partie annulaire radiale disposée contre la surface radiale de la bride, et une partie annulaire axiale disposée contre la paroi interne du corps principal.

D'autres caractéristiques, buts et avantages apparaîtront mieux à la lecture de la description détaillée qui va suivre, faite en référence aux figures annexées données à titre d'exemple non limitatif et sur lesquelles :
La figure 1 est une vue partielle en coupe transversale d'un exemple de carter de soufflante conforme à l'invention,
Les figures 2a et 2b illustrent des étapes de fabrication du carter de soufflante de la figure 1, et

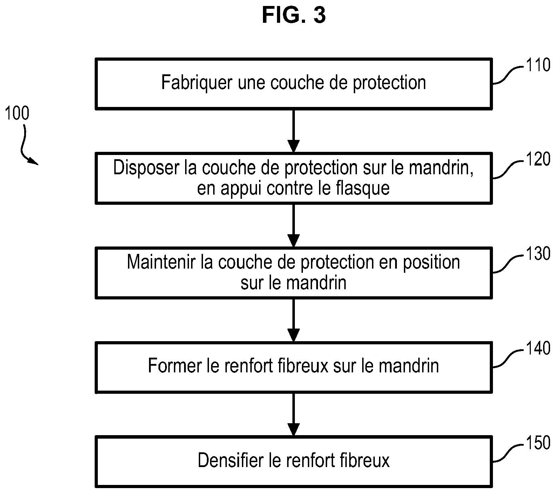

La figure 3 est un organigramme représentant différentes étapes d'un exemple de réalisation du procédé de fabrication d'un carter conforme à l'invention.

Un moteur à turbine à gaz comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

Les turbines sont couplées au compresseur et à la soufflante par des arbres coaxiaux respectifs.

Le moteur est logé à l'intérieur d'un carter comprenant plusieurs parties correspondant à différents éléments du moteur. Ainsi, la soufflante est entourée par exemple par un carter de soufflante 10, qui est connecté en amont à une manche d'entrée d'air et en aval à une virole annulaire d'un carter intermédiaire.

Le carter de soufflante 10 comprend un corps principal 12 globalement cylindrique, présentant une direction principale s'étendant selon un axe longitudinal X sensiblement parallèle à l'écoulement des gaz. Le corps principal 12 du carter peut présenter une épaisseur variable, comme indiqué dans la demande FR 2 913 053, et peut être muni de brides externes 14 au niveau de ses extrémités amont et aval afin de permettre son montage et sa liaison avec d'autres pièces métalliques, dont la manche d'entrée d'air, le carter intermédiaire ou encore la virole annulaire.

Ici, le carter de soufflante 10 est réalisé en matériau composite à renfort fibreux densifié par une matrice. Le renfort est en fibres, et comprend notamment des fibres de carbone, et la matrice est en polymère, par exemple époxide, bismaélique ou polyimide.

Le renfort peut être formé par enroulement sur un mandrin 30 d'une texture fibreuse 16 réalisée par tissage tridimensionnel avec épaisseur évolutive conformément à la description de la demande FR 2 913 053, le renfort fibreux constituant alors une préforme fibreuse complète du carter de soufflante 10 formée en une seule pièce avec des parties de renfort correspondant aux brides 14.

Le mandrin 30 comprend une surface externe dont le profil correspond à celui de la surface interne du carter 10 à réaliser, ainsi que deux flasques 32 s'étendant radialement depuis ses extrémités libres adaptés pour former les brides 14 amont et aval du carter de soufflante 10. Par son enroulement sur le mandrin 30, la texture fibreuse 16 épouse alors le profil du mandrin 30, de sorte que ses parties d'extrémités forment les parties de préformes correspondant aux brides 14 du carter 10 en prenant appui sur les flasques 32.

Afin de protéger des phénomènes de corrosion galvanique les pièces métalliques en contact avec le carter de soufflante 10 (manche d'entrée d'air, carter intermédiaire, virole annulaire), qui sont généralement réalisées en aluminium, on dispose en outre une couche de protection 20 contre la partie du carter 10 destinée à venir en contact avec le carter en aluminium, à savoir les brides 14 amont et aval du carter 10.

Par exemple, la couche de protection 20 peut être disposée contre la surface des brides 14 destinée à venir en contact avec les pièces métalliques, c'est-à-dire contre la surface radiale 14a des brides 14a qui s'étend dans le prolongement de la paroi interne 13 du carter de soufflante 10. Pour la bride amont 14, il s'agit par conséquent de sa surface amont, tandis que pour la bride aval 14, il s'agit de sa surface aval.

De la sorte, la couche de protection 20 permet d'éviter le contact entre l'aluminium et le renfort fibreux du carter de soufflante 10, et donc les phénomènes de corrosion galvanique, sans requérir aucune modification supplémentaire du carter de soufflante 10 ou des pièces métalliques. Par ailleurs, elle simplifie la maîtrise des dimensions finales du carter de soufflante 10, ainsi que les opérations de finition, la couche de protection 20 formant une surépaisseur sacrificielle pouvant être usinée facilement sans pour autant toucher les brides amont ou aval 14.

Par exemple, la couche de protection 20 peut comprendre des fibres de verre, renforcées éventuellement par un liant. Le liant est alors choisi de manière à être compatible avec la matrice et se dissoudre dans celle-ci lors de la densification du renfort fibreux. Il peut par exemple s'agir d'une matrice polymère compatible avec les polyépoxydes. Le poids de la couche de protection 20 ainsi obtenu est donc modéré.

La couche de protection 20 peut présenter une section transversale droite et former une partie annulaire radiale plane 22, de sorte qu'elle recouvre uniquement (mais intégralement) la surface radiale 14a de la bride 14 correspondante. Elle permet ainsi d'éviter tout contact direct avec les pièces métalliques.

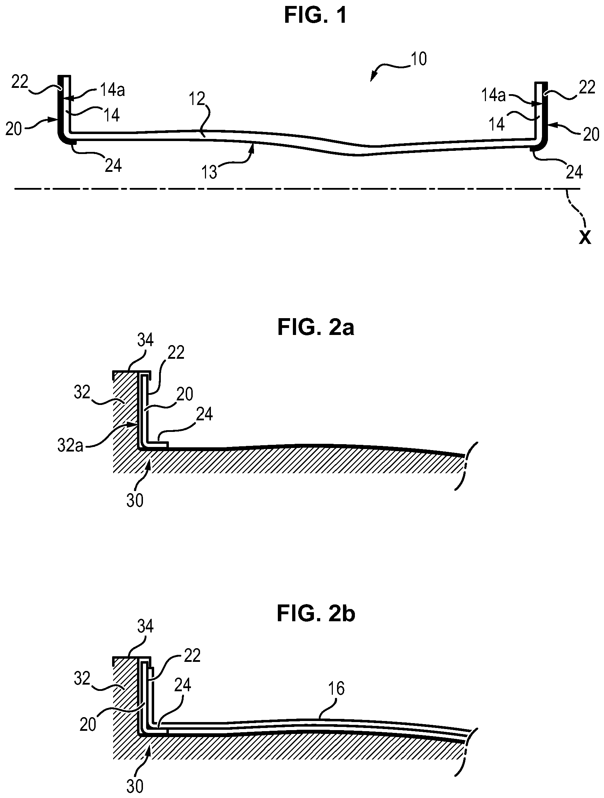

En variante, comme illustré sur la figure 1, la couche de protection peut présenter une section transversale en forme de L et former un anneau coudé, comprenant, outre une partie annulaire radiale 22 adaptée pour recouvrir la surface radiale 14a de la bride annulaire 14, une partie annulaire axiale 24, disposée contre la paroi interne 13 du carter de soufflante 10.

Un exemple de réalisation 100 d'un carter de soufflante 10 comprenant une couche de protection 20 contre la corrosion galvanique va à présent être décrit, dans lequel la couche de protection 20 contre la corrosion galvanique est incorporée à la texture fibreuse 16 du carter de soufflante 10 préalablement à sa densification.

Pour cela, la couche de protection 20 est appliquée 120 sur le mandrin 30, en recouvrant les flasques 32 adaptés pour former les brides 14 du carter de soufflante 10 et l'intégralité de la surface du corps du mandrin 30.

Selon une forme de réalisation, la couche de protection 20 est préformée aux dimensions du mandrin 30 et des flasques 32. Elle forme donc un anneau présentant un diamètre interne sensiblement égal au diamètre externe du mandrin, et dont la dimension radiale est au plus égale à celle des flasques 32. La couche de protection 20 peut par exemple être réalisée (étape 110) à partir d'une tresse, d'une bande ou d'une spirale de fibres de verre sèches, éventuellement renforcées par le liant, et est alors semi-rigide, ce qui facilite sa mise en place sur le mandrin 30 et permet de maîtriser de manière simple et rapide ses dimensions (épaisseur, diamètre, etc.) et sa qualité. De plus, la mise en oeuvre d'une couche de protection 20 semi-rigide permet de maintenir en position la texture fibreuse 16 lors de son enroulement ultérieur sur le mandrin 30, notamment en niveau du premier tour. Cette couche de protection semi-rigide 20 sera ensuite rigidifiée au moment de la densification par une matrice de la texture fibreuse 16 du carter de soufflante 10.

En variante, la couche de protection 20 peut être réalisée en fibres de verre renforcées par une résine polymérisée. La couche de protection 20 est alors plus rigide que dans la première variante de réalisation lorsqu'elle est placée sur le mandrin 30.

La couche de protection 20 présente alors une forme annulaire, correspondant à la forme annulaire des flasques 32 du mandrin 30, de section transversale plane ou en forme de L.

Dans le cas d'une couche de protection 20 ayant une section transversale droite, un anneau plan est appliqué contre la surface radiale 32a de chacun des flasques 32 du mandrin 30, de sorte qu'une fois le carter de soufflante 10 réalisé, seule la surface de la bride 14 s'étendant dans le prolongement de la paroi interne 13 du carter de soufflante 10 est recouverte par la couche de protection 20.

Dans le cas d'une couche de protection 20 ayant une section transversale en forme de L, un anneau coudé est appliqué contre la surface radiale 32a de chacun des flasques 32, en appui contre le corps du mandrin 30. Ainsi, une fois le carter de soufflante 10 réalisé, l'extrémité axiale de la paroi interne 13 du carter de soufflante 10 est également recouverte par la couche de protection 20. Cette forme de réalisation permet de mieux maintenir en position la texture fibreuse 16, d'éviter tout contact direct avec les pièces métalliques adjacentes, et d'éviter les phénomènes de corrosion galvaniques engendrés par le contact des fibres de carbone avec de l'eau retenue au niveau des brides 14 grâce à sa partie annulaire axiale 24.

On réalise ensuite le corps principal 12 du carter en matériau composite (étape 140) par enroulement de la texture fibreuse 16 sur le mandrin 30, conformément à ce qui est décrit par exemple dans le document FR 2 913 053.

Afin de maintenir la couche de protection 20 en position et d'éviter qu'elle ne glisse au cours de l'étape d'enroulement, on peut notamment la fixer sur le corps du mandrin 30 et/ou les flasques 32 grâce à des organes de maintien 34 (étape 130). Il peut s'agir notamment de pinces ou de clips répartis sur la circonférence du flasque 32 correspondant. Le nombre d'organes de maintien 34 dépend du diamètre du carter de soufflante 10 et des contraintes appliquées par la préforme, et peuvent être de l'ordre de 2 à 10.

Ces organes de maintien 34 peuvent en outre être ajustables à l'épaisseur de la couche de protection 20.

La texture fibreuse 16 est alors enroulée sur le mandrin 30 et les flasques 32, par-dessus la couche de protection 20, en évitant de recouvrir les organes de fixation 34 pour ne pas créer d'espace entre la couche de protection 20 et la texture 16. La préforme fibreuse recouvre alors la couche de protection 20, à l'exception d'un mince trottoir au niveau de la périphérie de la couche de protection 20, correspondant aux zones en contact avec les organes de maintien 34.

Au cours d'une dernière étape (étape 150), on densifie alors la préforme fibreuse 16 ainsi que la couche de protection 20 par injection de la matrice, conformément à la description du document FR 2 913 053. Le carter de soufflante 10 ainsi obtenu peut alors subir des étapes de finition, notamment au niveau des brides 14 qui intègrent la couche de protection 20 contre la corrosion galvanique. En particulier, l'usinage des brides 14 du carter de soufflante est simplifié, dans la mesure où la couche de protection 20 constitue une surépaisseur sacrificielle qu'il est possible d'usiner sans endommager structurellement le renfort fibreux du carter de soufflante 10. La structure du carter de soufflante 10 reste donc indemne.

Les dimensions finales du carter de soufflante 10 sont en outre mieux maîtrisées.

## Revendications

1. Procédé de fabrication (100) d'un carter (10) de turbomachine en matériau composite comprenant un renfort fibreux densifié par une matrice, comprenant les étapes successives suivantes :
- réaliser (110) une couche de protection contre la corrosion galvanique (20) à partir d'une tresse de fibres de verre séchées, d'une bande de fibres de verre séchées ou d'une spirale de fibres de verre séchées de manière à obtenir une couche de protection contre la corrosion galvanique semi-rigide, préformée aux dimensions d'un mandrin (30) et d'un flasque radial annulaire (32), le mandrin (30) présentant un profil correspondant à celui du carter (10) à fabriquer et comprenant le flasque radial annulaire (32),
- disposer (120) la couche de protection contre la corrosion galvanique (20) sur le mandrin (30), en appliquant la couche de protection (20) contre le flasque radial annulaire (32) du mandrin (30),
- former (140) le renfort fibreux (16) sur le mandrin (30) en recouvrant la couche de protection contre la corrosion galvanique (20), et
- densifier (150) le renfort fibreux (16) par une matrice.

2. Procédé de fabrication (100) selon la revendication 1, dans lequel la couche de protection contre la corrosion galvanique (20) est renforcée par un liant.

3. Procédé de fabrication (100) selon l'une des revendications 1 à 2, dans lequel la couche de protection contre la corrosion galvanique (20) est maintenue en position sur le mandrin (30) par des organes de maintien (34) fixés sur la circonférence du flasque radial annulaire (32) du mandrin (30) lors de la formation du renfort fibreux (140).

4. Procédé de fabrication (100) selon la revendication 3, dans lequel les organes de maintien (34) sont ajustables à l'épaisseur de la couche de protection (20).

5. Carter (10) de turbomachine en matériau composite comprenant un renfort fibreux densifié par une matrice, comprenant un corps principal (12) globalement cylindrique présentant une direction principale s'étendant selon un axe longitudinal (X), et au moins une bride (14) s'étendant radialement par rapport à l'axe longitudinal depuis une extrémité libre du corps principal (12),
**caractérisé en ce qu'**il comprend une couche de protection (20) contre la corrosion galvanique comprenant des fibres de verre disposée contre une surface radiale (14a) de la bride annulaire (14) et s'étendant dans le prolongement d'une paroi interne (13) du corps principal (12) et **en ce qu'**il est obtenu selon un procédé (100) selon l'une des revendications 1 à 4.

6. Carter (10) selon la revendication 5, comprenant une bride amont (14) et une bride aval (14) s'étendant radialement par rapport à l'axe longitudinal (X) depuis une extrémité libre amont et aval respectivement du corps principal (12), et dans lequel la bride amont (14) et la bride aval (14) comprennent chacune une couche de protection contre la corrosion galvanique (20) disposée contre la surface radiale (14a) desdites brides amont et aval (14) et s'étendant dans le prolongement de la paroi interne (13) du corps principal (12).

7. Carter (10) selon l'une des revendications 5 ou 6, dans lequel la couche de protection contre la corrosion galvanique (20) comprend en outre un liant.

8. Carter (10) selon l'une des revendications 5 à 7, dans lequel la couche de protection contre la corrosion galvanique (20) a une section transversale en L, et comprend une partie annulaire radiale (22) disposée contre la surface radiale (14a) de la bride (14), et une partie annulaire axiale (24) disposée contre la paroi interne (13) du corps principal (12).

## Patentansprüche

1. Verfahren zur Herstellung (100) eines Turbomaschinengehäuses (10) aus Verbundwerkstoff umfassend eine durch eine Matrix verdichtete Faserverstärkung, umfassend die folgenden aufeinanderfolgenden Schritte:
- Herstellen (110) einer Schutzschicht gegen galvanische Korrosion (20) aus einem Geflecht aus getrockneten Glasfasern, einem Band aus getrockneten Glasfasern oder einer Spirale aus getrockneten Glasfasern, um eine halbstarre Schutzschicht gegen galvanische Korrosion zu erzielen, die auf die Abmessungen eines Dorns (30) und eines ringförmigen Radialflansches (32) vorgeformt ist, wobei der Dorn (30) ein Profil aufweist, das dem des herzustellenden Gehäuses (10) entspricht und den ringförmigen Radialflansch (32) umfasst,
- die Schutzschicht gegen galvanische Korrosion (20) auf dem Dorn (30) anordnen (120), wobei die Schutzschicht (20) am ringförmigen Radialflansch (32) des Dorns (30) aufgebracht wird,
- Ausbilden (140) der Faserverstärkung (16) auf dem Dorn (30) durch Abdecken der Schutzschicht gegen galvanische Korrosion (20) und
- Verdichten (150) der Faserverstärkung (16) durch eine Matrix.

2. Verfahren zur Herstellung (100) nach Anspruch 1, wobei die Schutzschicht gegen galvanische Korrosion (20) mit einem Bindemittel verstärkt ist.

3. Verfahren zur Herstellung (100) nach einem beliebigen der vorstehenden Ansprüche 1 bis 2, wobei die Schutzschicht gegen galvanische Korrosion (20) durch Halteelemente (34) auf dem Dorn (30) in Position gehalten wird, die während der Ausbildung der Faserverstärkung (140) am Umfang des ringförmigen Radialflansches (32) des Dorns (30) befestigt sind.

4. Verfahren zur Herstellung (100) nach Anspruch 3, wobei die Halteelemente (34) auf die Dicke der Schutzschicht (20) einstellbar sind.

5. Turbomaschinengehäuse (10) aus Verbundwerkstoff umfassend eine durch eine Matrix verdichtete Faserverstärkung, umfassend einen insgesamt zylinderförmigen Hauptkörper (12), der eine Hauptrichtung aufweist, die sich entlang einer Längsachse (X) erstreckt, und zumindest einen Flansch (14), der sich von einem freien Ende des Hauptkörpers (12) aus radial zur Längsachse erstreckt, **dadurch gekennzeichnet, dass** er eine Schutzschicht (20) gegen galvanische Korrosion umfasst, die Glasfasern enthält, die an einer radialen Oberfläche (14a) des ringförmigen Flansches (14) angeordnet sind und sich in Verlängerung einer Innenwand (13) des Hauptkörpers (12) erstrecken, und dass sie nach einem Verfahren (100) gemäß einem beliebigen der vorstehenden Ansprüche 1 bis 4 erzielt wird.

6. Gehäuse (10) nach Anspruch 5, umfassend einen stromaufwärtigen Flansch (14) und einen stromabwärtigen Flansch (14), die sich im Verhältnis zur Längsachse (X) radial von einem freien stromaufwärtigen beziehungsweise stromabwärtigen Ende des Hauptkörpers (12) erstrecken, und wobei der stromaufwärtige Flansch (14) und der stromabwärtige Flansch (14) jeweils eine Schutzschicht gegen galvanische Korrosion (20) umfassen, die an der radialen Oberfläche (14a) des stromaufwärtigen und stromabwärtigen Flansches (14) angeordnet sind und sich in Verlängerung der Innenwand (13) des Hauptkörpers (12) erstrecken.

7. Gehäuse (10) nach einem beliebigen der vorstehenden Ansprüche 5 oder 6, wobei die Schutzschicht gegen galvanische Korrosion (20) ferner ein Bindemittel enthält.

8. Gehäuse (10) nach einem beliebigen der vorstehenden Ansprüche 5 bis 7, wobei die Schutzschicht gegen galvanische Korrosion (20) einen L-förmigen Querschnitt und einen an der radialen Oberfläche (14a) des Flansches (14) angeordneten radialen Ringabschnitt (22) und einen an der Innenwand (13) des Hauptkörpers (12) angeordneten axialen Ringabschnitt (24) aufweist.

## Claims

1. A method for manufacturing (100) a turbomachine casing (10) comprising composite material comprising a fibrous reinforcement densified by a matrix, comprising the following successive steps:
- creating (110) a layer for protection against galvanic corrosion (20) based on a braid of dry glass fibers, a strip of dry glass fibers or a spiral of dry glass fibers so as to obtain a semi-rigid protective layer against galvanic corrosion, preformed to the dimensions of a mandrel (30) and of an annular radial flange (32), the mandrel (30) having a profile corresponding to that of the casing (10) to be manufactured and comprising the annular radial flange (32),
- disposing (120) the protective layer against galvanic corrosion (20) on the mandrel (30) by applying the protective layer (20) against the annular radial flange (32) of the mandrel (30),
- forming (140) the fibrous reinforcement (16) on the mandrel (30) by covering the protective layer against galvanic corrosion (20), and
- densifying (150) the fibrous reinforcement (16) using a matrix.

2. The manufacturing method (100) according to claim 1, wherein the protective layer against galvanic corrosion (20) is reinforced by a binder.

3. The manufacturing method (100) according to one of claims 1 to 2, wherein the protective layer against galvanic corrosion (20) is retained in position on the mandrel (30) by retaining members (34) attached to the circumference of the annular radial flange (32) of the mandrel (30) during the formation of the fibrous reinforcement (140).

4. The manufacturing method (100) according to claim 3, wherein the retaining members (34) are adjustable to the thickness of the protective layer (20) .

5. A turbomachine casing (10) of composite material comprising a fibrous reinforcement densified by a matrix, comprising a generally cylindrical main body (12) having a principal direction extending along a longitudinal axis (X), and at least one flange (14) extending radially with respect to the longitudinal axis from a free end of the main body (12), **characterized in that** it comprises a protective layer (20) against galvanic corrosion comprising glass fibers disposed against a radial surface (14a) of the annular flange (14) and extending in the extension of an internal wall (13) of the main body (12) and **in that** it is obtained using a method (100) according to one of claims 1 to 4.

6. The casing (10) according to claim 5, comprising an upstream strap (14) and a downstream flange (14) extending radially with respect to the longitudinal axis (X) from an upstream and downstream respectively free end of the main body (12), and wherein the upstream flange (14) and the downstream flange (14) each comprise a protective layer against galvanic corrosion (20) disposed against the radial surface (14a) of said upstream and downstream flanges (14) and extending in the extension of the internal wall (13) of the main body (12).

7. The casing (10) according to one of claims 5 or 6, wherein the protective layer against galvanic corrosion (20) also comprises a binder.

8. The casing (10) according to one of claims 5 to 7, wherein the protective layer against galvanic corrosion (20) has an L-shaped cross section, and comprises an annular radial portion (22) disposed against the radial surface (14a) of the flange (14), and an annular axial portion (24) disposed against the internal wall (13) of the main body (12).
